# FASCICULE DE BREVET EUROPEEN

(11) **EP 1 718 426 B1**
(45) Date de publication et mention de la délivrance du brevet: **05.10.2011**
(21) Numéro de dépôt: 05730711.8
(22) Date de dépôt: 22.02.2005
(51) Int. Cl.: B22C 5/18, A62D 3/00, B09B 3/00, B09C 1/10, B09C 1/02

(54) **PROCÉDÉ DE DÉPOLLUTION BIOTECHNOLOGIQUE DE SABLES DE FONDERIE CONTENANT DU PHENOL**
VERFAHREN ZUR BIOTECHNOLOGISCHEN ENTGIFTUNG VON PHENOL ENTHALTENDEM FORMSAND
METHOD FOR THE BIOTECHNOLOGICAL DEPOLLUTION OF FOUNDRY SAND CONTAINING PHENOL

(30) Priorité: 23.02.2004 FR 0401778
(43) Date de publication de la demande: 08.11.2006
(73) Titulaire: BUREAU DE RECHERCHES GEOLOGIQUES ET MINIERES B.R.G.M., 75739 Paris Cédex 15 (FR)
(72) Inventeur: D'HUGUES, Patrick, F-45160 Olivet (FR); DICTOR, Marie-Christine, F-45000 Orléans (FR)
(74) Mandataire: Oudin, Stéphane
(86) Numéro de dépôt international: PCT/FR2005/000409
(87) Numéro de publication internationale: WO 2005/089982

(56) Documents cités:
- DE-A- 3 720 833
- DATABASE WPI Section Ch, Week 198009 Derwent Publications Ltd., London, GB; Class D16, AN 1980-15982c XP002251637 -& SU 526 256 A (CASTING EQUIP TECHN AUTO) 5 août 1979 (1979-08-05)
- DATABASE WPI Section Ch, Week 198716 Derwent Publications Ltd., London, GB; Class C03, AN 1987-114647 XP002297077 -& SU 1 253 709 A (GORSK AGRIC INST) 30 août 1986 (1986-08-30)

## Description

La présente invention concerne un procédé de traitement, notamment de sables de fonderie, afin d'en éliminer les phénols, dans le but de permettre leur recyclage tout en assurant la préservation de l'environnement.

On sait que les fonderies, et notamment celles appartenant au secteur automobile, font appel pour constituer les moules destinés à la production des pièces de moteurs, à des mélanges constitués de sable et d'un liant organique polymérisé, la plupart du temps formé de résines phénoliques. Une fois le moulage de la pièce mécanique effectué, une partie des sables qui n'ont pas été brûlés lors de la coulée, et dont les phénols qu'ils contiennent n'ont pas été détruits par le métal en fusion, renferment des proportions plus ou moins élevées de ces derniers.

Dès lors la question se pose du "devenir" des sables ainsi contaminés. On sait, qu'en fonction de leur teneur en phénol, ils seront, suivant les réglementations en vigueur (cf arrêté du 16 juin 1991), soit stockés dans des décharges de classe I ou II, soit valorisés, notamment pour des applications dans le domaine du bâtiment ou des travaux publics. Ils pourront également être réutilisés dans des installations aptes à les détruire, telles que par exemple des cimenteries, des briqueteries ou des tuileries. On comprend dans ces conditions que le taux de phénol restant dans de tels sables de fonderie revêt une importance économique très importante.

La présente invention vise à assurer un traitement de ces résidus de sable phénolés de façon à diminuer leur teneur en phénol jusqu'à une valeur telle qu'elle permette leur valorisation, par exemple dans le domaine des travaux publics pour une utilisation notamment en remblais (teneurs inférieures à 1 mg de phénol par kg de matière sèche).

On sait que des solutions technologiques intéressantes et alternatives à la mise en décharge existent actuellement, et il est possible de citer par exemple un certain nombre de techniques basées sur le traitement thermique des sables permettant une régénération complète du produit en faisant appel à différentes technologies, telles que notamment des fours rotatifs, des fours à chauffage indirect, et des fours à lit fluidisé.

Le traitement biologique présente les avantages d'offrir une grande souplesse de mise en oeuvre par rapport au gisement des sables et constitue une approche économiquement intéressante.

On sait également que le phénol qui est le constituant principal des résines phénoliques est dégradé par de nombreux microorganismes aérobies (bactéries, champignons) qui l'utilisent comme source de carbone et d'énergie dans leur métabolisme. Dans le cadre de la présente invention on a sélectionné des populations microbiennes capables de métaboliser le phénol jusqu'à des concentrations de 200 mg/l en présence d'une source d'azote et de phosphore.

En sortie de l'opération de fonderie, les résidus sont tout d'abord concassés, broyés et débarrassés des éléments étrangers qu'ils peuvent contenir de façon à former un sable fin. C'est celui-ci qui est soumis à l'action des micro-organismes. A cet effet le traitement biologique est effectué par des micro-organismes (essentiellement des bactéries) qui sont entretenues dans un bassin agité à partir duquel elles sont distribuées dans le sable. Les lixiviats sont recueillis à la base du tas de sable et l'opération se poursuit jusqu'à disparition des phénols.

Cependant, lors de la mise en oeuvre d'un tel procédé sur site, on a constaté qu'une contamination par des micro-organismes autochtones pouvait apparaître lorsque la teneur en phénol descend en dessous du seuil de pression de sélection phénol. Cette contamination intervient principalement pendant les quelques jours de montage du tas où les lixiviats ne sont pas encore «enrichis» par le phénol contenu à l'origine dans le sable. Elle peut également intervenir en début de phase de traitement si les sables sont peu contaminés en phénol, leur lixiviation ne permettant pas de maintenir une teneur en phénol supérieure au seuil de pression de sélection phénol. Dans tous les cas, cette contamination se traduit par un risque de disparition pure et simple des micro-organismes apportés, essentiellement des bactéries actives pour la dégradation du phénol.

Il est connu un procédé de traitement de sables de fonderie renfermant une substance organique par action de micro-organismes, dans lequel on arrose le sable à traiter avec une solution microbienne (Database WPI Sextion Ch, Week 198009 Derwent Publications Ltd., London, GB ; Class D16, AN 1980-15982c XP002251637-& SU-A-526256 (Casting Equip Auto)).

Il est également connu un procédé de traitement en tas de matières renfermant du phénol, dans lequel on arrose le tas à traiter avec une solution microbienne entretenue dans un bassin et l'on recueille les lixiviats dans ledit bassin (DE-A- 3720833, lequel document montre un procédé selon le préambule de la revendication 1).

La présente invention a pour but de proposer un procédé de traitement du type précité, intégrant une méthode de gestion du procédé qui évite la formation de tels contaminants.

Conformément à la revendication 1, ce but est atteint par un procédé de traitement en tas de sables renfermant du phénol, notamment des sables de fonderie, par action de microorganismes, dans lequel on arrose le tas à traiter avec une solution microbienne entretenue dans un bassin inoculum/lixiviat et l'on recueille les lixiviats dans ledit bassin, caractérisé en ce qu'il comporte au moins une étape consistant à surveiller la valeur de la pression de sélection afin que, lorsque celle-ci descend au dessous du seuil de pression de sélection phénol, on met en oeuvre une procédure consistant à :
- stopper l'arrosage du tas,
- rétablir dans le bassin inoculum/lixiviat la pression de sélection phénol, par un ajout contrôlé de phénol exogène,
- reprendre l'arrosage du tas dès disparition de phénol résiduel dans le bassin inoculum/lixiviat.

Préférentiellement le seuil de pression de sélection phénol sera égal à la pression de sélection à partir de laquelle on évite, dans le bassin inoculum/lixiviat, la formation de contaminants. Ce seuil de pression de sélection phénol sera préférentiellement compris entre 10 et 20 mg/l.

La présente invention a également pour objet un procédé suivant l'invention, comportant un procédé de maintien en état, pendant une période d'attente, d'une solution microbienne active dans un bassin d'ensimage, destinée à la mise en oeuvre ultérieure d'un procédé de traitement en tas, de sables renfermant du phénol, notamment des sables de fonderie, par action de microorganismes, dans lequel on arrose le tas à traiter avec la solution microbienne et l'on recueille les lixiviats dans ledit bassin, caractérisé en ce que pendant la période d'attente on met en oeuvre les étapes consistant à :
- amener, dans ledit bassin d'ensimage, la pression de sélection à une valeur supérieure au "seuil de pression de sélection phénol", notamment compris entre 10 et 100 mg/l par un ajout de phénol exogène,
- ralentir l'activité des bactéries en interrompant toute alimentation externe en air du bassin d'ensimage,
- soumettre périodiquement, et de façon ponctuelle, la solution contenue dans le bassin d'ensimage à une aération.

Préférentiellement le procédé comportera une étape consistant à surveiller la valeur de la pression de sélection afin que, lorsque celle-ci descend au dessous du "seuil de pression de sélection phénol", on la rétablisse par un ajout de phénol exogène.

On décrira ci-après, à titre d'exemple non limitatif, diverses formes d'exécution de la présente invention, en référence au dessin annexé sur lequel :
La figure unique est un schéma d'une installation de traitement de sables phénolés suivant l'invention.

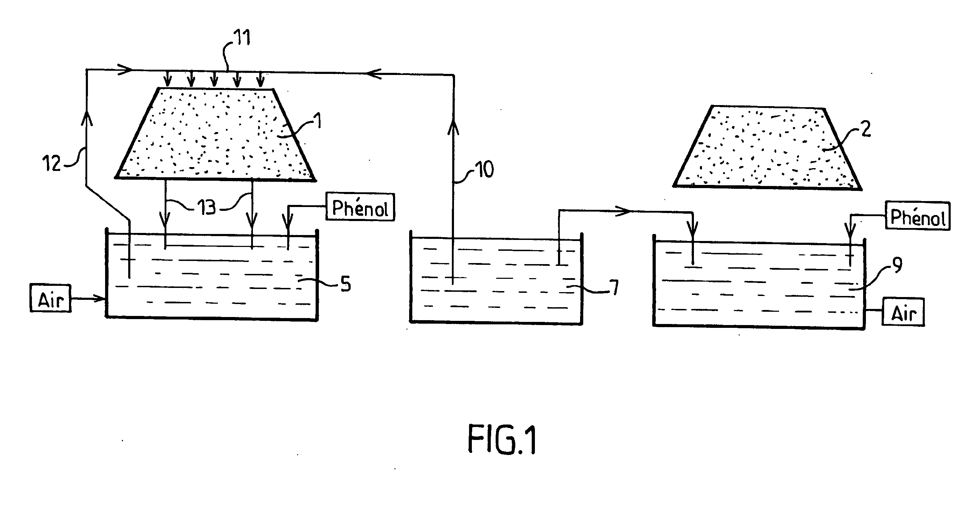

L'installation de traitement des sables de fonderie suivant l'invention qui est représentée sur la figure 1 comprend deux tas de traitement, à savoir un tas 1 en cours de traitement, et un tas 2 en situation d'attente avant traitement et trois bassins, à savoir un bassin inoculum/lixiviat 5 contenant une suspension microbienne qui est associée au tas 1, un bassin de nutriment 7 contenant les nutriments nécessaires à l'alimentation des microorganismes et un second bassin inoculum/lixiviat 9 associé au tas 2.

L'installation comprend en outre des moyens de pompage 12 et 10 permettant d'amener les solutions respectivement contenues dans les bassins inoculum/lixiviat 5 et nutriment 7 dans des moyens d'arrosage 11 qui vont les répartir sur le tas 1.

En début de processus on constitue tout d'abord le tas 1 à partir de sables qui ont été broyés à une granulométrie inférieure à environ 4 mm et qui ont ensuite été humidifiés et ensemencés avec la suspension microbienne provenant du bassin inoculum/lixiviat 5 en faisant appel aux moyens de pompage 12 et d'arrosage 11. On a en effet constaté que cette façon de procéder permettait de vaincre le caractère hydrophobe des sables ce qui favorise une meilleure homogénéisation et répartition des bactéries à l'intérieur du tas.

Le tas 1 est ensuite arrosé avec un milieu nutritif provenant du bassin nutriment 7 via les moyens de pompage 10 et d'arrosage 11. On recueille les lixiviats provenant du tas 1 dans le bassin inoculum/lixiviat puis on arrose ensuite le tas de façon continue à partir de ce bassin, si bien que la dégradation des phénols par les bactéries s'effectue d'une part à l'intérieur du tas lui-même et d'autre part dans le bassin inoculum/lixiviat 5.

On a constaté, au cours du fonctionnement sur site d'un tel procédé, c'est-à-dire lorsque celui-ci se déroule "en réel", à savoir dans de simples bassins à l'air libre, qu'une contamination de l'inoculum par des micro-organismes autochtones (notamment du type algues vertes) se développait en utilisant en tant que nutriments ceux (notamment l'azote, le potassium et le magnésium) fournis par le bassin nutriment 7 pour nourrir les micro-organismes destinés à dégrader le phénol. Une telle contamination se traduit par une baisse d'efficacité du procédé pouvant aller jusqu'à la disparition pure et simple des bactéries.

Afin d'éviter cette contamination il a été établi que lorsque l'on créait dans le bassin inoculum/lixiviat 5, un certain niveau de pression de sélection, cette contamination disparaissait. Suivant la présente invention on propose de rétablir dans le bassin inoculum/lixiviat 5, lorsque cela est nécessaire, un tel niveau de pression de sélection (dit ci-après «seuil de pression de sélection phénol») et ceci par un ajout contrôlé de phénol exogène. Cet ajout impose la mise en oeuvre d'un contrôle à deux niveaux. Un premier contrôle assurera que la quantité de phénol exogène ajouté est juste suffisante pour que la pression de sélection existant dans le bassin inoculum/lixiviat 5 atteigne le dit seuil de pression de sélection phénol. Un second contrôle de la quantité de phénol restant dans le bassin inoculum/lixiviat 5 permettra de surseoir à l'arrosage du tas tant que cette quantité de phénol sera supérieure à une valeur plancher afin d'éviter d'augmenter le niveau de pollution du tas 1 en cours de traitement.

On a représenté sur la figure 1 un second tas à traiter 2. En effet, suivant une autre disposition de l'invention, on débutera la préparation de ce second tas 2 dès la fin de la phase d'humidification/ensemencement du premier tas 1. Cette disposition permet d'éviter si nécessaire d'utiliser les lixiviats en tant que source de préparation de l'inoculum du nouveau tas à traiter 2. Ce mode de mise en oeuvre permet d'éviter les dérives provenant des variations au cours du temps des teneurs en phénol et du développement éventuel des contaminants.

Il conviendra donc suivant l'invention de maintenir la culture biologique active sur le second tas 2 tout en limitant autant que faire ce peut, pour des raisons essentiellement économiques, les apports en phénol exogène, et ceci tant que l'on n'est pas prêt pour la mise en oeuvre de ce second tas. On décrira ci-après les différentes phases d'un tel procédé.

Dans une première phase de celui-ci on ajoute du phénol dans le bassin inoculum/lixiviat 9 jusqu'à l'obtention d'une concentration en phénol au moins égale au seuil de pression de sélection phénol, c'est-à-dire de l'ordre de 10 à 100 mg/l.

Ensuite, dans une seconde phase, on entre dans la période d'attente, et on ralentit dans le bassin 9 l'activité des bactéries en interrompant toute agitation et toute alimentation externe en air. On a en effet constaté que l'oxygène dissous dans le milieu était suffisant pour pourvoir à leur entretien. Cet arrêt de l'aération a également un effet de ralentissement sur la prolifération des contaminants. Par contre il a un effet néfaste dans la mesure où il favorise le développement des micro-organismes anaérobies qui ont alors tendance à proliférer.

C'est pourquoi, dans une troisième phase du procédé, on assure périodiquement et de façon ponctuelle une agitation/aération du milieu contenu dans le bassin inoculum/lixiviat 9 de façon à stopper le développement de ces micro-organismes anaérobies.

Dans une quatrième phase du procédé, si le démarrage du procédé de traitement du second tas 2 est prévu, on remonte alors la concentration en phénol par un ajout de phénol exogène, jusqu'à atteindre une concentration de 50 à 100 mg/l c'est-à-dire la concentration de préparation de l'inoculum. On prélèvera alors l'inoculum nécessaire au tas suivant et l'on opèrera pour celui-ci ainsi que pour le second tas etc...

Si par contre le démarrage du procédé sur le second tas 2 n'est pas prévu on effectue alors un contrôle tel que s'il met en évidence une concentration en phénol en solution inférieure au seuil de pression de sélection phénol, il renvoie à la première phase du processus.

## Revendications

1. Procédé de traitement en tas de sables renfermant du phénol, notamment des sables de fonderie, par action de micro-organismes, dans lequel on arrose le tas (1) à traiter avec une solution microbienne entretenue dans un bassin inoculum/lixiviat (5) et l'on recueille les lixiviats dans ledit bassin, **caractérisé en ce qu'**il comporte au moins une étape consistant à surveiller la valeur de la pression de sélection afin que, lorsque celle-ci descend au dessous du seuil de pression de sélection phénol, on met en oeuvre une procédure consistant à :
- stopper l'arrosage du tas (1),
- rétablir dans le bassin inoculum/lixiviat (5) la pression de sélection phénol, par un ajout contrôlé de phénol exogène,
- reprendre l'arrosage du tas (1) dès disparition de phénol résiduel dans le bassin inoculum/lixiviat (5).

2. Procédé suivant la revendication 1 **caractérisé en ce que** le seuil de pression de sélection phénol est égal à la concentration en phénol en solution à partir de laquelle on évite, dans le bassin inoculum/lixiviat (5), la formation de contaminants.

3. Procédé suivant la revendication 2 **caractérisé en ce que** le seuil de pression de sélection phénol est compris entre 10 et 20 mg/l.

4. Procédé suivant la revendication 1, comportant un procédé de maintien en état, pendant une période d'attente, d'une solution microbienne active dans un bassin d'ensimage (9), destinée à la mise en oeuvre ultérieure d'un procédé de traitement en tas, de sables renfermant du phénol, notamment des sables de fonderie, suivant la revendication 1, par action de micro-organismes, dans lequel on arrose le tas à traiter avec la solution microbienne et l'on recueille les lixiviats dans ledit bassin, **caractérisé en ce que** pendant la période d'attente on met en oeuvre les étapes consistant à :
- amener dans ledit bassin d'ensimage (9) la concentration de la solution à une valeur supérieure au seuil de pression de sélection phénol par un ajout de phénol exogène,
- ralentir l'activité des bactéries en interrompant toute alimentation externe en air du bassin d'ensimage (9),
- soumettre périodiquement et de façon ponctuelle la solution contenue dans le bassin d'ensimage (9) à une aération.

5. Procédé suivant la revendication 4, **caractérisé en ce que** la valeur à laquelle on amène la concentration de la solution est comprise entre 20 et 100 mg/l.

6. Procédé suivant l'une des revendications 4 ou 5, **caractérisé en ce qu'**il comporte une étape consistant à surveiller la valeur de la concentration de la solution afin que, lorsque celle-ci descend au dessous du seuil de pression de sélection phénol, on la rétablisse par un ajout de phénol exogène.

## Claims

1. Method of heap treatment of sands containing phenol, in particular foundry sands, by action of microorganisms, wherein the heap (1) to be treated is sprayed with a microbial solution that is stored in an inoculum/leachate tank (5) and the leachates are collected in the said tank, **characterised in that** it comprises at least one step of controlling the selection pressure value in order to, when it falls below the phenol selection pressure threshold, implement a procedure consisting of:
- stopping the spraying of the heap (1),
- restoring the phenol selection pressure in the inoculum/leachate tank (5) by controlled addition of exogenous phenol,
- restarting the spraying of the heap (1) as soon as the residual phenol has disappeared in the inoculum/leachate tank (5).

2. Method according to claim 1 **characterised in that** the phenol selection pressure threshold is equal to the phenol concentration in solution from which, in the inoculum/leachate tank (5), the contaminant formation is avoided.

3. Method according to claim 2 **characterised in that** the phenol selection pressure threshold is comprised between 10 and 20 mg/l.

4. Method according to claim 1, comprising a method of maintenance, during a waiting period, of an active microbial solution in a batch tank (9) for subsequent implementation of a heap treatment method of sands containing phenol, in particular foundry sands, according to claim 1, by action of microorganisms, wherein the heap to be treated is sprayed with the microbial solution and the leachates are collected in the said tank, **characterised in that**, during the waiting period, are implemented the steps consisting of:
- bringing the solution concentration in the said batch tank (9) to a value higher than the phenol selection pressure threshold by addition of exogenous phenol,
- slowing down the bacteria activity by interrupting any external air feed of the batch tank (9),
- periodically and punctually aerating the solution contained in the batch tank (9).

5. Method according to claim 4 **characterised in that** the value that the solution concentration is brought to is comprised between 20 and 100 mg/l.

6. Method according any one of claims 4 or 5 **characterised in that** it comprises a step of controlling the solution concentration value in order to, when it falls below the phenol selection pressure threshold, restore it by addition of exogenous phenol.

## Patentansprüche

1. Verfahren zur chargenweisen Behandlung von Phenol enthaltendem Sand, insbesondere Formsand, durch Einwirkung von Mikroorganismen, bei dem die zu behandelnde Charge (1) mit einer mikrobiellen Lösung berieselt wird, die in einem Inokulat-/Eluatbecken (5) unterhalten wird, und das Eluat in dem Becken aufgefangen wird, **dadurch gekennzeichnet, dass** es mindestens einen Schritt beinhaltet, der darin besteht, den Wert des Selektionsdrucks zu überwachen, um, wenn dieser unter den Grenzwert des Phenol-Selektionsdrucks sinkt, eine Prozedur durchzuführen, die besteht aus:
- Stoppen des Berieselns der Charge (1),
- Wiederherstellen des Phenol-Selektionsdrucks im Inokulat-/Eluatbecken (5) mittels gesteuertem exogenen Zusetzen von Phenol,
- Fortführen des Berieselns der Charge (1) ab Verschwinden des Restphenols im Inokulat-/Eluatbecken (5).

2. Verfahren nach Anspruch 1, **dadurch gekennzeichnet, dass** der Grenzwert des Phenol-Selektionsdrucks gleich groß wie die Phenolkonzentration in der Lösung ist, ab der eine Bildung von Kontaminanten im Inokulat-/Eluatbecken (5) vermieden wird.

3. Verfahren nach Anspruch 2, **dadurch gekennzeichnet, dass** der Grenzwert des Phenol-Selektionsdrucks zwischen 10 und 20 mg/l beträgt.

4. Verfahren nach Anspruch 1, das ein Verfahren zum Instandhalten während einer Wartezeit einer aktiven mikrobiellen Lösung in einem Beschlichtungsbecken (9) beinhaltet, die bestimmt ist zur späteren Durchführung eines Verfahrens zur chargenweisen Behandlung von Phenol enthaltendem Sand, insbesondere Formsand, nach Anspruch 1 durch Einwirkung von Mikroorganismen, bei dem die zu behandelnde Charge mit der mikrobiellen Lösung berieselt wird und das Eluat in dem Becken aufgefangen wird, **dadurch gekennzeichnet, dass** während der Wartezeit die folgenden Schritte durchgeführt werden:
- im Beschlichtungsbecken (9) wird, mittels exogenem Zusetzen von Phenol, die Konzentration der Lösung auf einen Wert oberhalb des Grenzwertes des Phenol-Selektionsdrucks gebracht,
- Verlangsamen der Bakterienaktivität durch Unterbrechen jeglicher externer Luftversorgung des Beschlichtungsbeckens (9),
- die im Beschlichtungsbecken (9) enthaltene Lösung wird periodisch und punktuell einer Belüftung unterzogen.

5. Verfahren nach Anspruch 4, **dadurch gekennzeichnet, dass** der Wert, auf den die Konzentration der Lösung gebracht wird, zwischen 20 und 100 mg/l beträgt.

6. Verfahren nach einem der Ansprüche 4 oder 5, **dadurch gekennzeichnet, dass** es einen Schritt beinhaltet, der darin besteht, den Wert der Konzentration der Lösung zu überwachen, um, wenn dieser unter den Grenzwert des Phenol-Selektionsdrucks sinkt, ihn mittels exogenem Zusetzen von Phenol wiederherzustellen.
